Europäisches Patentamt

European Patent Office

Office européen des brevets

(11) Veröffentlichungsnummer: **0 432 301 A1**

## (12) EUROPÄISCHE PATENTANMELDUNG

(21) Anmeldenummer: 89123074.0

(22) Anmeldetag: 13.12.89

(51) Int. Cl.5 **F16H 7/12**

(43) Veröffentlichungstag der Anmeldung:
**19.06.91 Patentblatt 91/25**

(84) Benannte Vertragsstaaten:
**AT BE CH DE ES FR GB GR IT LI LU NL SE**

(71) Anmelder: **WILHELM HERM. MÜLLER GMBH &
CO KG
Postkamp 14
W-3000 Hannover 1(DE)**

(72) Erfinder: **Perneder, Raimund, Dipl.-Ing.
Milinowskistrasse 37a
W-1000 Berlin 37(DE)**

(74) Vertreter: **Freiherr von Welser, Hubert
Danziger Strasse 15
W-8000 München 40(DE)**

(54) **Spannrolle.**

(57) Spannrolle für einen Treibriemen, deren Riemen-scheibe (18,18′) auf dem Außenring (14,14′) eines Wälzlagers (3,21,22) vorgesehen ist, das auf einem Lagerzapfen (9) eines an der Wand (1) eines Ma-schinenteils verschraubbaren, aus einem Sockelteil (4) und einem Deckelteil (6) zusammengeschraubten oder verklebten Tragteils (2) zwischen deren Schul-tern (10,11) festgelegt ist. Das Sockelteil (4) liegt an der Wand (1) mit einer Randleiste (16) eines Fußes (12) an, der mindestens den Durchmesser der Au-ßenfläche des Außenringes (14,14′) des Wälzlagers (3,21,22) aufweist.

Fig.1

## SPANNROLLE

Die Erfindung betrifft eine Spannrolle für einen Treibriemen, deren Riemenscheibe auf dem Außenring eines Wälzlagers angeordnet ist, dessen Innenring um einen als Lagerzapfen ausgebildeten Fortsatz eines mit einer Schraube an der Wand eines Maschinenteils angeordneten Tragteils liegt und mit einem Deckel befestigt ist.

Derartige Spannrollen dienen zum Spannen oder Umlenken von Flach-, Zahn- oder Keilriemenantrieben. Sie sind bei größeren Zugspannungen des Treibriemens Kippkräften ausgesetzt. Nur kleine aus ihnen resultierende Verstellungen des Winkels der Drehachse zur Normalen würden zur Störung des Geradauslaufes des Treibriemens und zum Ablaufen aus seiner Ideallinie führen.

Bekannte Ausführungen solcher Spannrollen weisen Sockel auf, deren Durchmesser an ihrer Auflage an der Wand des Maschinenteils nicht größer ist als der des inneren Durchmessers des Innenrings des Wälzlagers (EuPat 0 157 193 A, DE Gbm 82 35 715). Wichtig ist desweiteren eine Sicherung des Lagers gegen ein Verschieben nach außen. Es werden hierfür Sprengringe verwendet, die in eine Nut des Lagerzapfens des Wälzlagers eingreifen und vor dem Innenring des Wälzlagers liegen (z.B. EuPat 0 157 193 A) oder ein flacher Deckel, dessen Rand den Innenring des Wälzlagers gegen eine Schulter des Sockels preßt und der bei der Montage der Spannrolle an der Wand mit einer exzentrischen Schraube befestigt wird. Bei der in DE Gbm 82 35 715 dargestellten Spannrolle liegt der Innenring des Wälzlagers nicht an dem Lagerzapfen an, so daß radiale Verschiebungen des Wälzlagers bei größeren Belastungen durch den Riemenzug nicht ausgeschlossen sind. Die Spannrollen nach den hier genannten Vorschlägen sind bei größeren Zug- und Schwingungsbelastungen durch den Treibriemen nicht sicher genug.

Aufgabe der Erfindung war daher eine Spannrolle kräftiger und stabiler Ausführung, die vor allem für Werkzeugmaschinen geeignet ist, bei denen größere Massen mit hoher Genauigkeit bewegt werden müssen oder für Maschinen, die stärkere Schwingungen höherer Frequenz erzeugen, wobei das Tragteil die durch den Riemenzug ausgeübten Kippkräfte aufnehmen kann und bei denen das Wälzlager gegen axiale und radiale Verschiebung auch bei größeren Beanspruchungen gesichert ist.

Ein Ausführungsbeispiel der Erfindung wird im folgenden anhand der Zeichnungen näher beschrieben. Es zeigen

Fig. 1 einen Axialschnitt durch eine erfindungsgemäße Spannrolle

Fig. 2 einen Axialschnitt durch eine andere Ausführungsform der erfindungsgemäßen Spannrolle

Fig. 3 einen Axialschnitt durch eine erfindungsgemäße geklebte Spannrolle.

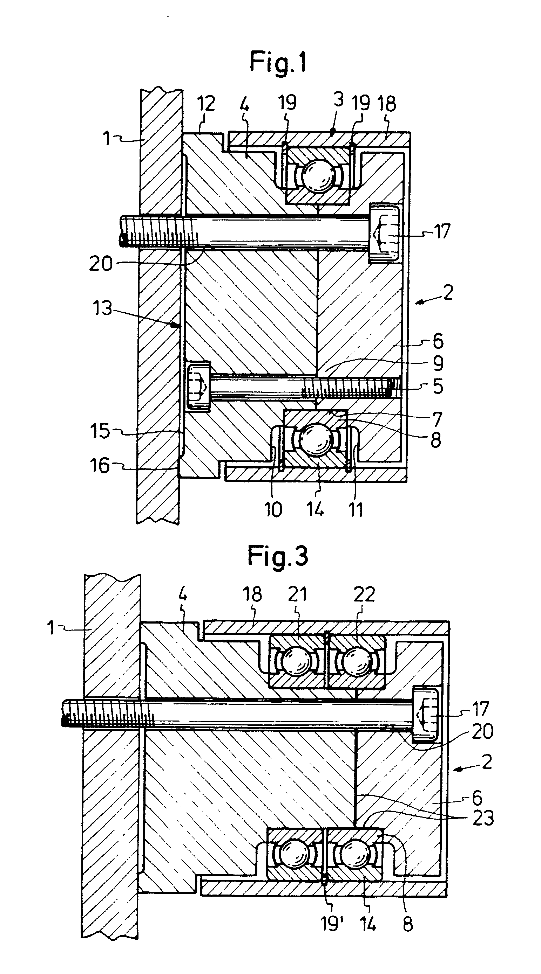

Die in Figur 1 dargestellte Spannrolle weist ein an der Wand 1 eines Maschinenteils verschraubbares Tragteil 2 für das Wälzlager 3 auf, das aus einem an der Wand 1 anliegenden Sockelteil 4 und einem mit diesem von der Seite der Wand 1 her mit der Schraube 5 verbundenen Deckelteil 6 besteht. Das Sockelteil 4 und Deckelteil 6 weisen gemeinsam eine Ausdrehung 7 mit dem Durchmesser der Innenfläche des Innenrings 8 des Wälzlagers 3 und von dessen axialer Breite auf, die einen radial geteilten Lagerzapfen 9 für das Wälzlager 3 bildet und die senkrechte Schultern 10 und 11 beiderseits begrenzen, zwischen denen der Innenring 8 des Wälzlagers 3 beim Verschrauben von Sockelteil 4 und Deckelteil 6 festgelegt wird.

Am Sockelteil 4 ist wandseitig ein Fuß 12 vorgesehen, dessen Durchmesser an seiner an der Wand 1 anliegenden Grundfläche 13 mindestens so groß ist wie der äußere Durchmesser des Außenringes 14 des Wälzlagers 3. Bei breiteren Treibriemen oder Riemenscheiben größeren Durchmessers ist es zweckmäßig, einen entsprechend breiteren Fuß vorzusehen. In der an der Wand 1 anliegenden Grundfläche 13 des Sockelteils 4 ist mit Rücksicht auf Unebenheiten der Wand 1 eine konzentrische Ausnehmung 15 vorgesehen, die nur eine schmale Randleiste 16 stehen läßt, um einen höheren Flächendruck beim Anziehen der Befestigungsschraube 17, mit der die Spannrolle an der Wand 1 befestigt wird, zu erzielen und um Kippbelastungen mit dem Rand des Fußes 12 mit möglichst weitem Hebelarm aufnehmen zu können.

Auf dem Außenring 14 des Wälzlagers 3 ist die Riemenscheibe 18, hier eine solche für einen Flachriemen, aufgeschoben und mit Sprengringen 19 gegen axiale Verschiebungen gesichert.

Die Befestigungsschraube 17 ist in einer durch Sockelteil 4 und Deckelteil 6 gehenden Bohrung 20 versenkt angeordnet. Diese Bohrung 20 kann in bekannter Weise exzentrisch angeordnet sein, um die Riemenspannung durch Verdrehen der Spannrolle einstellen zu können.

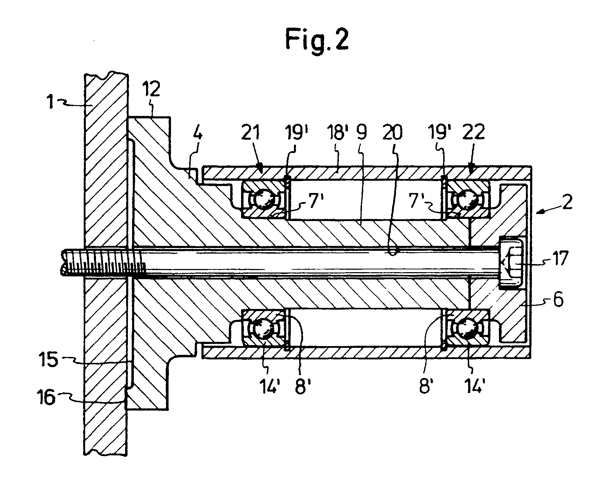

Bei breiteren Treibriemen und damit axial längeren Riemenscheiben kann es zweckmäßig sein, als Wälzlager zwei Kugellager 21 und 22 vorzusehen. Die Riemenscheibe 18 in ihrer Lage haltenden Sprengringe 19′ werden dann an der Innenseite der Außenringe 14′ dieser Kugellager angeordnet, mit denen auch die Kugellager 21 und 22 gegen axiale Verschiebungen nach innen gesichert sind (Figur 2).

Bei diesen Anordnungen ist das bzw. sind die Wälzlager 3,21,22 sowohl gegen radiale Verschiebungen durch ihr Anliegen an dem Lagerzapfen 9 sowie gegen axiale Verschiebungen durch Festlegen ihrer Innenringe 8 zwischen den Schultern 10,11 der Ausdrehung 7' gesichert. Der breite Fuß 12 nimmt die durch den Riemenzug verursachten Kippbelastungen auf, so daß es zu keiner Verwindung des Treibriemens kommen kann.

Ein wesentlicher Vorteil der Verschraubung von Sockelteil 4 und Deckelteil 6 mit der Schraube 5 der erfindungsgemäßen Spannrolle ist es, daß sie in fertig montiertem Zustand in den Vertrieb kommen kann und nicht wie bei bekannten Konstruktionen beim Anbau an die Wand 1 eines Maschinenteils zusammengesetzt werden muß. Statt der Verschraubung können Sockelteil 4 und Deckelteil 6 an ihrer Verbindungsstelle im Lagerzapfen 9 verklebt werden. Es ist dann vorteilhaft, auch das Wälzlager 3 bzw., wenn es aus 2 Kugel lagern besteht, das äußere Kugellager 22 mit der Innenseite seines Innenrings 8' mit dem Lagerzapfen 9 zu verkleben. Zweckmäßigerweise ist dabei die Trennfuge zwischen den Teilen des Lagerzapfens 9 des Sockelteils 4 und des Deckelteils 6 in die axiale Mitte des Innenrings 8' zu verlegen, wie dies Figur 3 zeigt. Die Klebflächen sind dort als verdickte Linie mit 23 bezeichnet.

Bezugszeichenverzeichnis

 1 Wand
 2 Tragteil
 3 Wälzlager
 4 Sockelteil
 5 Schraube
 6 Deckelteil
 7,7' Ausdrehung
 8,8' Innenring
 9 Lagerzapfen
 10,11 Schultern
 12 Fuß
 13 Grundfläche
 14,14' Außenring
 15 Ausnehmung
 16 Randleiste
 17 Befestigungsschraube
 18,18' Riemenscheibe
 19,19' Sprengringe
 20 Bohrung für 17
 21,22 Kugellager
 23 Klebfuge

**Ansprüche**

1. Spannrolle für einen Treibriemen, dessen Riemenscheibe auf dem Außenring (14) eines Wälzlagers (3,21,22) angeordnet ist, dessen Innenring (8') um einen als Lagerzapfen (9) ausgebildeten Fortsatz eines mit einer Befestigungsschraube (17) an der Wand (1) eines Maschinenteils angeordneten Tragteils (2) liegt und mit einem Deckelteil (6) befestigt ist,
dadurch gekennzeichnet, daß sein Tragteil (2) einen an der Wand (1) des Maschinenteils anliegenden breiten Fuß (12) aufweist, dessen Durchmesser mindestens ebenso groß ist wie der Außendurchmesser des Außenrings (14) des Wälzlagers (3,21,22), und daß das Tragteil (2), das aus einem dem Fuß (12) aufweisenden Sockelteil (4) und einem mit ihm fest verbundenen Deckelteil (6) besteht, wobei Sockelteil (4) und Deckelteil (6) eine gemeinsame den Lagerzapfen (9) bildende Ausdrehung (7,7') mit beiderseitigen Schultern (10.11) zur Anlage an dem Innenring (8) oder den Innenringen (8') des Wälzlagers (3,21,22) aufweisen.

2. Spannrolle nach Anspruch 1,
dadurch gekennzeichnet, daß Sockelteil (4) und Deckelteil (6) durch eine von der Grundfläche (13) des Fußes (12) her eingesetzten Schraube (5) verbunden sind.

3. Spannrolle nach Anspruch 1,
dadurch gekennzeichnet, daß Sockelteil (4) und Deckel teil (6) durch Verkleben verbunden sind.

4. Spannrolle nach Anspruch 3,
dadurch gekennzeichnet, daß die Klebflächen zwischen Sockelteil (4) und Deckelteil (6) und zwischen dem Lagerzapfen (9) und der Innenseite des über der verklebten Trennfuge von Sockelteil (4) und Deckelteil (6) liegenden Wälzlagers (3. 22) verlaufen.

## Fig.1

## Fig.3

# Fig.2

| Europäisches Patentamt | EUROPÄISCHER RECHERCHENBERICHT | Nummer der Anmeldung |
|---|---|---|
| | | EP 89 12 3074 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | FR-A-2634263 (SKF GMBH)<br>* Seite 3; Figur 1 * | 1 | F16H7/12 |
| A | | 2, 4 | |
| A | EP-A-0337215 (KOYO SEIKO CO., LTD.)<br>* Seite 4; Figur 1 *<br>--- | 1, 2 | |
| D,A | EP-A-0157193 (RIV-SKF)<br>* Figur 1 *<br>--- | 1 | |
| D,A | DE-U-8235715.3 (SKF)<br>* Figur 1 *<br>----- | 1, 2 | |

RECHERCHIERTE SACHGEBIETE (Int. Cl.5)

F16H

Der vorliegende Recherchenbericht wurde für alle Patentansprüche erstellt

| Recherchenort | Abschlußdatum der Recherche | Prüfer |
|---|---|---|
| DEN HAAG | 16 AUGUST 1990 | FLORES E. |